# DEMANDE DE BREVET EUROPEEN

(11) **EP 4 704 313 A1**
(43) Date de publication de la demande: **04.03.2026**
(21) Numéro de dépôt: 25198737.6
(22) Date de dépôt: 28.08.2025
(51) Int. Cl.: H02K 11/026, E06B 9/72

(54) **ACTIONNEUR ÉLECTROMÉCANIQUE ET DISPOSITIF D'OCCULTATION COMPRENANT UN TEL ACTIONNEUR ÉLECTROMÉCANIQUE**

(30) Priorité: 29.08.2024 FR 2409226
(71) Demandeur: SIMU, 70100 Arc-lès-Gray (FR)
(72) Inventeur: DARD, Yannick, 70100 ARC-LES-GRAY (FR); JONDOT, Lucas, 70100 ARC-LES-GRAY (FR); RENAUD, Sébastien, 70100 ARC-LES-GRAY (FR); EUVRARD, Baptiste, 70100 ARC-LES-GRAY (FR)
(74) Mandataire: Lavoix

(57) **Abrégé**

Un actionneur (11) comprend un carter tubulaire, un moteur (16), une unité de contrôle (15) et un module de filtrage (22) d'ondes électromagnétiques, logés à l'intérieur du carter (17) et disposés selon une direction définie par un axe de rotation (X) de l'actionneur (11). Le module de filtrage (22) comprend une première inductance (41), s'étendant suivant une direction définie par un premier axe longitudinal (L1), une deuxième inductance (42), s'étendant suivant une direction définie par un deuxième axe longitudinal (L2), et un support (48), sur lequel sont montées les inductances (41, 42). Les premier et deuxième axes (L1, L2) s'étendent respectivement dans un premier plan et dans un deuxième plan, parallèles à l'axe de rotation (X). Dans le premier plan, le premier axe (L1) est incliné par rapport à l'axe de rotation (X) d'une première valeur d'inclinaison (α1) non-nulle et de signe positif. En outre, dans le deuxième plan, le deuxième axe (L2) est incliné par rapport à l'axe de rotation (X) d'une deuxième valeur d'inclinaison (α2) non-nulle et de signe négatif. Les première et deuxième valeurs d'inclinaison (α1, α2) présentent la même valeur absolue, comprise dans une plage s'étendant entre 30° et 60°.

## Description

La présente invention concerne un actionneur électromécanique pour un dispositif d'occultation, autrement dit un actionneur électromécanique d'un dispositif d'occultation.

La présente invention concerne également un dispositif d'occultation comprenant un écran entraîné en déplacement par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document KR 1999 0035463 U qui décrit un actionneur électromécanique. L'actionneur électromécanique comprend un carter, un moteur électrique, une unité de contrôle et un module de filtrage d'ondes électromagnétiques. Le moteur électrique est de type à courant continu. L'unité de contrôle commande le moteur électrique. L'unité de contrôle est reliée électriquement au moteur électrique, au moyen d'une liaison électrique, par l'intermédiaire du module de filtrage. L'unité de contrôle, le module de filtrage et le moteur électrique sont logés à l'intérieur du carter. Le module de filtrage comprend une première inductance, une deuxième inductance et un support. La première inductance s'étend suivant une direction définie par un premier axe longitudinal. La deuxième inductance s'étend suivant une direction définie par un deuxième axe longitudinal. En outre, les première et deuxième inductances sont montées sur le support.

Lorsque le moteur électrique est commandé en fonctionnement par l'unité de contrôle, le moteur électrique génère des ondes électromagnétiques, notamment en raison du frottement de ses balais sur son collecteur.

En outre, l'actionneur électromécanique, qui est décrit en tant qu'état de la technique dans ce document KR 1999 0035463 U, comprend des conducteurs électriques pour relier électriquement le module de filtrage à des bornes d'alimentation électrique du moteur électrique.

Dans le cas où les première et deuxième inductances sont montées libres à l'intérieur du carter entre l'unité de contrôle et le moteur électrique, autrement dit sans être positionnées selon une disposition prédéterminée, de même que les conducteurs électriques, les ondes électromagnétiques générées par l'activation électrique du moteur électrique perturbent le fonctionnement d'autres organes de l'actionneur électromécanique.

Dans le cas d'un actionneur électromécanique pour un dispositif d'occultation, l'organe qui est perturbé par les ondes électromagnétiques est, notamment, le module de communication d'une unité de contrôle. En l'occurrence, soit une portée de réception de signaux, en particulier radioélectriques, par le module de communication, qui ont été émis à partir d'une unité de commande, soit une portée d'émission de signaux, en particulier radioélectriques, émis par le module de communication vers l'unité de commande est réduite, autrement dit est dégradée. La perturbation est due à la propagation des ondes électromagnétiques au travers de conducteurs électriques reliant électriquement l'unité de contrôle à un moteur électrique, par couplage électromagnétique entre des conducteurs électriques, en raison notamment de la proximité entre ceux-ci.

L'actionneur électromécanique décrit dans le document KR 1999 0035463 U présente l'inconvénient que le module de filtrage ne permet d'absorber qu'une faible partie des ondes électromagnétiques transmises par les conducteurs électriques reliant électriquement le module de filtrage au moteur électrique.

En outre, plus la longueur des conducteurs électriques est importante, plus l'absorption par le module de filtrage des ondes électromagnétiques, qui sont transmises par les conducteurs électriques, est difficile.

Par ailleurs, cet actionneur électromécanique présente l'inconvénient que chacune des première et deuxième inductances est soudée sur le support et que les première et deuxième inductances sont parallèles au support et perpendiculaires à l'axe de rotation de l'actionneur électromécanique.

Ainsi, ce positionnement des première et deuxième inductances, en particulier leur emplacement et leur orientation, à l'intérieur du carter de l'actionneur électromécanique risque de provoquer une rupture des conducteurs électriques reliant le module de filtrage aux bornes d'alimentation électrique du moteur électrique.

En outre, ce positionnement des première et deuxième inductances, en particulier leur emplacement et leur orientation, à l'intérieur du carter de l'actionneur électromécanique engendre des difficultés d'assemblage de l'actionneur électromécanique, étant donné que les conducteurs électriques sont pliés sur eux-mêmes avec une courbure importante.

Cet actionneur électromécanique présente également l'inconvénient qu'une mise à la masse entre le module de filtrage et le carter de l'actionneur électromécanique est nécessaire, afin d'évacuer les perturbations électromagnétiques.

Par conséquent, cette construction de l'actionneur électromécanique engendre un coût d'obtention élevé.

On connaît également le document EP 2 260 566 B1 qui décrit un actionneur électromécanique. L'actionneur électromécanique comprend un boîtier de réducteur, qui est réalisé sous la forme d'un pot et obturé par un couvercle, un moteur électrique, qui est fixé au boîtier de réducteur, une unité de contrôle, qui est disposée dans le couvercle, et des première et deuxième inductances de filtrage d'ondes électromagnétiques, qui sont disposées à l'intérieur du boîtier de réducteur. Le moteur électrique est de type à courant continu. L'unité de contrôle commande le moteur électrique. L'unité de contrôle est reliée électriquement au moteur électrique, au moyen d'une liaison électrique, par l'intermédiaire des première et deuxième inductances. La liaison électrique entre l'unité de contrôle et le moteur électrique, par l'intermédiaire des première et deuxième inductances, est mise en œuvre au moyen de plusieurs conducteurs électriques. La première inductance s'étend suivant une direction définie par un premier axe longitudinal. La deuxième inductance s'étend suivant une direction définie par un deuxième axe longitudinal. Les première et deuxième inductances sont montées sur un support. Les premier et deuxième axes longitudinaux des première et deuxième inductances s'étendent respectivement dans un premier plan et dans un deuxième plan, les premier et deuxième plans étant parallèles à un axe de rotation, qui est défini par un arbre de transmission du réducteur. Dans le premier plan, le premier axe longitudinal de la première inductance est incliné par rapport à l'axe de rotation d'une valeur d'inclinaison de 90°. Dans le deuxième plan, le deuxième axe longitudinal de la deuxième inductance est incliné par rapport à l'axe de rotation de la même valeur d'inclinaison de 90°.Cet actionneur électromécanique est encombrant, notamment selon une direction radiale à l'axe de rotation. En outre, les contraintes mécaniques sur les conducteurs électriques sont élevées et le positionnement des conducteurs électriques n'est pas garanti par rapport à l'unité de contrôle et au moteur électrique.

La présente invention a pour but de résoudre les inconvénients précités et de proposer un actionneur électromécanique d'un dispositif d'occultation, ainsi qu'un dispositif d'occultation comprenant un tel actionneur électromécanique, permettant de maîtriser un positionnement dans l'espace des première et deuxième inductances à l'intérieur du carter entre l'unité de contrôle et le moteur électrique, de sorte à améliorer une performance de traitement, autrement dit de filtrage ou d'atténuation, des ondes électromagnétiques par le module de filtrage.

A cet égard, la présente invention vise, selon un premier aspect, un actionneur électromécanique pour un dispositif d'occultation,
l'actionneur électromécanique comprenant au moins :
   - un carter,
   - un moteur électrique, le moteur électrique étant de type à courant continu,
   - une unité de contrôle, l'unité de contrôle commandant le moteur électrique, et
   - un module de filtrage d'ondes électromagnétiques, l'unité de contrôle étant reliée électriquement au moteur électrique, au moyen d'une liaison électrique, par l'intermédiaire du module de filtrage,
la liaison électrique entre l'unité de contrôle et le moteur électrique, par l'intermédiaire du module de filtrage, étant mise en œuvre au moyen de plusieurs conducteurs électriques,
le module de filtrage comprenant au moins :
   - une première inductance, la première inductance s'étendant suivant une direction définie par un premier axe longitudinal,
   - une deuxième inductance, la deuxième inductance s'étendant suivant une direction définie par un deuxième axe longitudinal, et
   - un support, les première et deuxième inductances étant montées sur le support.
les premier et deuxième axes longitudinaux des première et deuxième inductances s'étendant respectivement dans un premier plan et dans un deuxième plan, les premier et deuxième plans étant parallèles à un axe de rotation de l'actionneur électromécanique,
dans le premier plan, le premier axe longitudinal de la première inductance étant incliné par rapport à l'axe de rotation d'une première valeur d'inclinaison non-nulle, dans le deuxième plan, le deuxième axe longitudinal de la deuxième inductance étant incliné par rapport à l'axe de rotation d'une deuxième valeur d'inclinaison non-nulle, et
les première et deuxième valeurs d'inclinaison présentant la même valeur absolue.

Selon l'invention, l'unité de contrôle, le module de filtrage et le moteur électrique sont logés à l'intérieur du carter et disposés selon une direction définie par l'axe de rotation. Le carter est tubulaire. La première valeur d'inclinaison est de signe positif. La deuxième valeur d'inclinaison est de signe négatif. En outre, la valeur absolue des première et deuxième valeurs d'inclinaison est comprise dans une plage s'étendant entre 30° et 60°.

Ainsi, le support permet de maîtriser un positionnement dans l'espace, en particulier un emplacement et une orientation, des première et deuxième inductances à l'intérieur du carter entre l'unité de contrôle et le moteur électrique, de sorte à améliorer une performance de traitement, autrement dit de filtrage ou d'atténuation, des ondes électromagnétiques par le module de filtrage.

En outre, le support permet de guider les conducteurs électriques reliant les première et deuxième inductances à l'unité de contrôle et au moteur électrique à l'intérieur du carter, aussi bien lors d'une opération d'assemblage de l'actionneur électromécanique que dans une configuration assemblée de l'actionneur électromécanique.

De cette manière, le guidage des conducteurs électriques, ainsi que le positionnement des première et deuxième inductances, en particulier leur emplacement et leur orientation, au moyen du support à l'intérieur du carter entre l'unité de contrôle et le moteur électrique permettent d'éviter une rupture des conducteurs électriques, en particulier au niveau d'une jonction électrique entre l'un des conducteurs électriques et l'une des première et deuxième inductances.

Par ailleurs, le filtrage des ondes électromagnétiques est mis en œuvre de manière simple en reliant électriquement en série les première et deuxième inductances du module de filtrage entre l'unité de contrôle et le moteur électrique par les conducteurs électriques.

De cette manière, une mise à la masse entre le module de filtrage et le carter de l'actionneur électromécanique n'est pas nécessaire pour évacuer les perturbations électromagnétiques.

Par conséquent, le coût d'obtention de l'actionneur électromécanique est moins élevé.

En outre, le premier axe longitudinal de la première inductance est incliné par rapport au deuxième axe longitudinal de la deuxième inductance d'une valeur correspondant au double de la valeur absolue de chacune des première et deuxième valeurs d'inclinaison.

De cette manière, l'inclinaison en sens opposé des première et deuxième inductances respectivement de la première valeur d'inclinaison et de la deuxième valeur d'inclinaison, par rapport à l'axe de rotation permet, d'une part, de limiter les contraintes sur les conducteurs électriques et, d'autre part, de garantir le positionnement des conducteurs électriques à l'intérieur du carter, aussi bien lors d'une opération d'assemblage de l'actionneur électromécanique, que dans une configuration assemblée de l'actionneur électromécanique.

Le module de filtrage est donc compact, selon une direction radiale et selon une direction axiale par rapport à l'axe de rotation, et l'encombrement du module de filtrage à l'intérieur du carter est minimisé.

Selon une caractéristique avantageuse de l'invention, la valeur absolue des première et deuxième valeurs d'inclinaison est de 45°.

Selon une autre caractéristique avantageuse de l'invention, les premier et deuxième plans dans lesquels s'étendent les premier et deuxième axes longitudinaux des première et deuxième inductances sont disposés de part et d'autre de l'axe de rotation.

Selon une autre caractéristique avantageuse de l'invention, le premier plan est distant de l'axe de rotation d'une première valeur d'écartement non-nulle. Le deuxième plan est distant de l'axe de rotation d'une deuxième valeur d'écartement non-nulle. En outre, les première et deuxième valeurs d'écartement sont égales.

Selon une autre caractéristique avantageuse de l'invention, le support comprend des éléments de fixation par encliquetage élastique. En outre, chacune des première et deuxième inductances est montée sur le support au moyen des éléments de fixation par encliquetage élastique.

Selon une autre caractéristique avantageuse de l'invention, la liaison électrique entre l'unité de contrôle et le moteur électrique comprend un premier, un deuxième, un troisième et un quatrième conducteurs électriques. La première inductance est reliée électriquement, d'une part, à l'unité de contrôle par le premier conducteur électrique et, d'autre part, au moteur électrique par le deuxième conducteur électrique. En outre, la deuxième inductance est reliée électriquement, d'une part, à l'unité de contrôle par le troisième conducteur électrique et, d'autre part, au moteur électrique par le quatrième conducteur électrique.

Selon une autre caractéristique avantageuse de l'invention, l'unité de contrôle comprend un premier module de communication. En outre, le premier module de communication de l'unité de contrôle est logé à l'intérieur du carter.

La présente invention vise, selon un deuxième aspect, un dispositif d'occultation, le dispositif d'occultation comprenant au moins :
- un écran, et
- un actionneur électromécanique, conforme à l'invention et tel que mentionné ci-dessus, l'écran étant entraîné en déplacement par l'actionneur électromécanique.

Ce dispositif d'occultation présente des caractéristiques et avantages analogues à ceux décrits précédemment, en relation avec l'actionneur électromécanique selon l'invention.

Selon une caractéristique avantageuse de l'invention, le dispositif d'occultation comprend, en outre, un tube d'enroulement. L'écran est enroulable sur le tube d'enroulement. En outre, le tube d'enroulement est agencé de sorte à être entraîné en rotation par l'actionneur électromécanique.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation d'occultation conforme à un mode de réalisation de l'invention,
l'installation d'occultation comprenant un dispositif d'occultation conforme à l'invention et le dispositif d'occultation comprenant un dispositif d'entraînement motorisé ;
[Fig 2] la figure 2 est une vue schématique en perspective de l'installation d'occultation illustrée à la figure 1 ;
[Fig 3] la figure 3 est une vue schématique en coupe d'un actionneur électromécanique, conforme à l'invention et appartenant au dispositif d'entraînement motorisé illustré aux figures 1 et 2, selon un plan de coupe passant par un axe de rotation de l'actionneur électromécanique, cette vue schématique étant interrompue localement au niveau de plusieurs parties de l'actionneur électromécanique ;
[Fig 4] la figure 4 est une vue schématique de côté de l'actionneur électromécanique illustré à la figure 3, selon un angle de vue différent de celui de la figure 3 autour de l'axe de rotation, où un carter de l'actionneur électromécanique et un support d'un module de filtrage ont été ôtés, cette vue schématique étant interrompue localement au niveau de plusieurs parties de l'actionneur électromécanique ;
[Fig 5] la figure 5 est une vue schématique à plus grande échelle d'une partie de l'actionneur électromécanique illustré aux figures 3 et 4, selon un angle de vue différent de ceux des figures 3 et 4 autour de l'axe de rotation, où le support du module de filtrage est visible ;
[Fig 6] la figure 6 est une vue schématique à plus grande échelle d'une partie de l'actionneur électromécanique illustré aux figures 3 à 5, selon l'angle de vue de la figure 4, où le support du module de filtrage et un bol d'un moteur électrique ont été ôtés ;
[Fig 7] la figure 7 est une vue analogue à la figure 6, selon un angle de vue différent de celui de la figure 6 autour de l'axe de rotation ; et [Fig 8] la figure 8 est une vue schématique en perspective du support du module de filtrage.

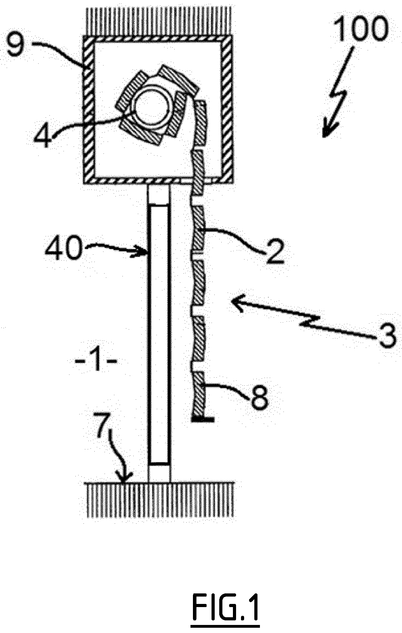

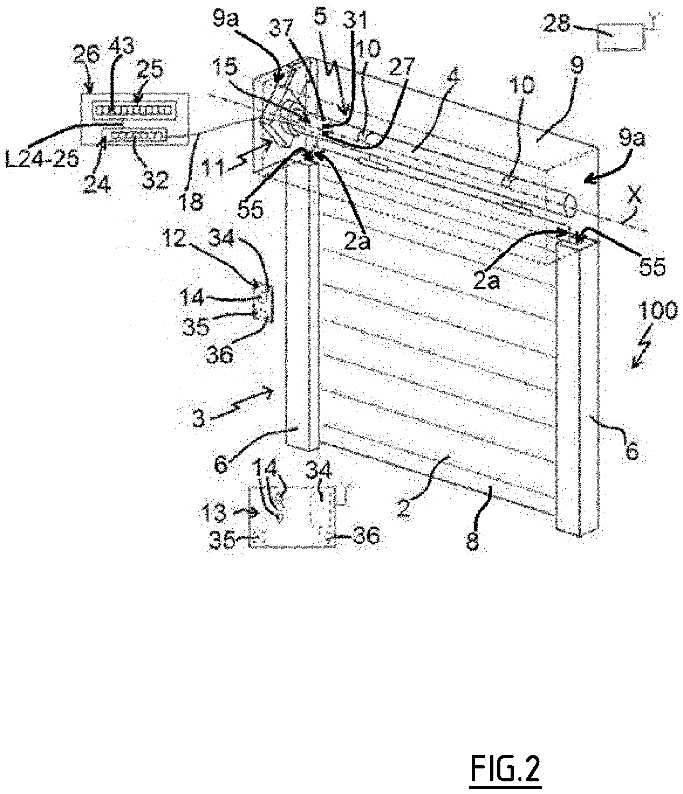

On décrit tout d'abord, en référence aux figures 1 et 2, une installation d'occultation 100 conforme à un mode de réalisation de l'invention. Cette installation d'occultation 100 comprend au moins un dispositif d'occultation 3. Cette installation d'occultation 100, installée dans un bâtiment, non représenté, comporte au moins une ouverture 1, dans laquelle est disposée une fenêtre 40 ou une porte, qui n'est représentée qu'à la figure 1. Cette installation d'occultation 100 est équipée d'au moins un écran 2 appartenant au dispositif d'occultation 3, en particulier un volet roulant motorisé. L'écran 2 du dispositif d'occultation 3 sert à occulter plus ou moins l'ouverture 1.

Une installation de fermeture et une installation de protection solaire sont des exemples d'installations d'occultation. De même, un dispositif de fermeture et un dispositif de protection solaire sont des exemples de dispositifs d'occultation.

L'installation de fermeture, d'occultation ou de protection solaire est par la suite appelée « installation d'occultation » 100.

Le dispositif de fermeture, d'occultation ou de protection solaire est par la suite appelé « dispositif d'occultation » 3. Le dispositif d'occultation 3 comprend l'écran 2.

Le dispositif d'occultation 3 peut être un volet roulant, un store en toile ou avec des lames orientables, un portail roulant, une grille, ou encore une porte. La présente invention s'applique à tous les types de dispositif d'occultation.

On décrit, en référence aux figures 1 et 2, un volet roulant conforme au mode de réalisation de l'invention.

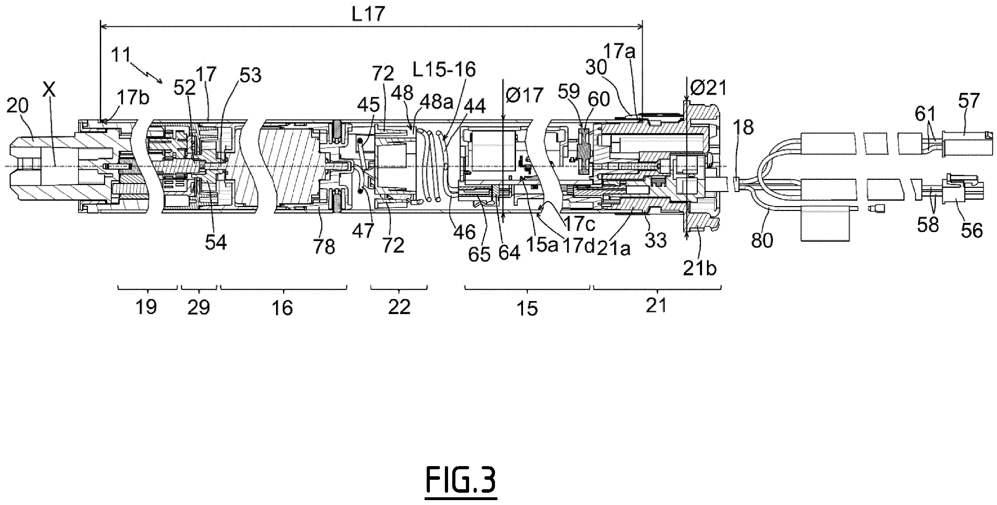

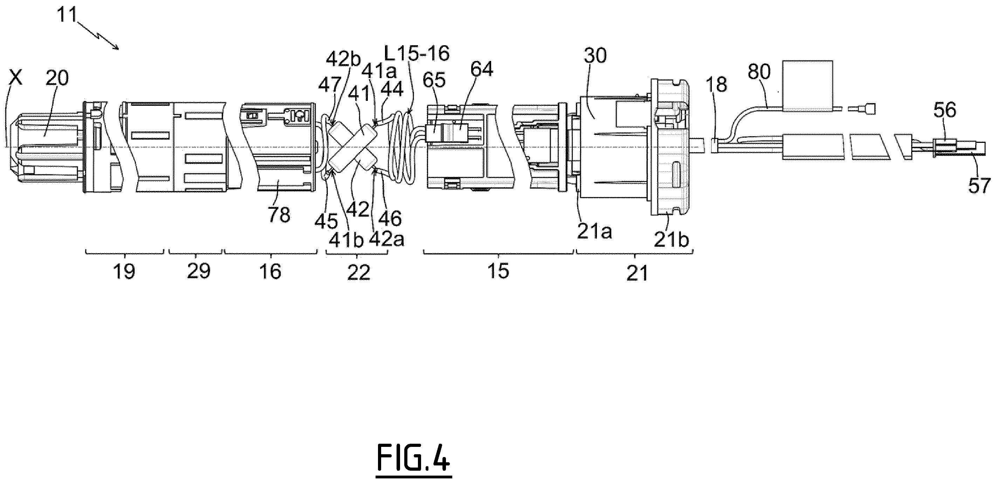

Le dispositif d'occultation 3 comprend un dispositif d'entraînement motorisé 5. Le dispositif d'entraînement motorisé 5 comprend un actionneur électromécanique 11 illustré aux figures 3 et 4.

L'écran 2 est configuré pour être déplacé, autrement dit est déplacé, au moyen du dispositif d'entraînement motorisé 5 et, plus particulièrement, de l'actionneur électromécanique 11.

Avantageusement, le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, le dispositif d'occultation 3 comprend, en outre, un coffre 9. En outre, le tube d'enroulement 4 et au moins une partie de l'écran 2 sont logés à l'intérieur du coffre 9, en particulier dans la configuration assemblée du dispositif d'occultation 3.

De manière générale, le coffre 9 est disposé au-dessus de l'ouverture 1, ou encore en partie supérieure de l'ouverture 1.

Avantageusement, le coffre 9 comprend deux joues 9a, telles qu'illustrées à la figure 2. Une joue 9a est disposée à chaque extrémité du coffre 9 et à chaque extrémité du tube d'enroulement 4, en particulier dans la configuration assemblée du dispositif d'occultation 3.

Ainsi, le tube d'enroulement 4 est maintenu par l'intermédiaire du coffre 9, en particulier par l'intermédiaire des joues 9a du coffre 9. Le coffre 9 permet de lier mécaniquement le dispositif d'occultation 3 à la structure du bâtiment, notamment à un mur du bâtiment.

Avantageusement, le dispositif d'occultation 3 peut également comprendre deux coulisses latérales 6, comme illustré uniquement à la figure 2. Chaque coulisse latérale 6 comprend une gorge 55. Chaque gorge 55 de l'une des coulisses latérales 6 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2. La barre de charge 8 peut également être appelée lame d'extrémité finale.

Le volet roulant, qui forme le dispositif d'occultation 3, comporte un tablier comprenant des lames horizontales articulées les unes aux autres, formant l'écran 2 du volet roulant 3, et guidées par les coulisses latérales 6. Ces lames sont jointives lorsque le tablier 2 du volet roulant 3 atteint sa position basse déroulée. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

La première lame du volet roulant 3, opposée à la lame d'extrémité finale 8, est reliée au tube d'enroulement 4 au moyen d'au moins une articulation 10, en particulier une pièce d'attache en forme de bande. La ou les articulations 10 sont fixées, notamment par vissage ou par rivetage, au tube d'enroulement 4.

Le mode de fixation de l'écran 2 sur le tube d'enroulement 4 n'est pas limitatif et peut être différent. Il peut être mis en œuvre, par exemple, au moyen de sangles.

Quel que soit le mode de réalisation, la première extrémité de l'écran 2 est disposée au niveau du coffre 9.

Dans le cas d'un volet roulant, la position haute enroulée correspond à la mise en appui de la lame d'extrémité finale 8, par exemple en forme de L, du tablier 2 du volet roulant 3 contre un bord du coffre 9 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée première position de fin de course ou position de fin de course haute, et une position fermée, correspondant à la position déroulée et pouvant également être appelée deuxième position de fin de course ou position de fin de course basse.

Ainsi, l'actionneur électromécanique 11 est configuré pour entraîner, autrement dit entraîne, en déplacement l'écran 2, entre la première position de fin de course et la deuxième position de fin de course, et inversement.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation d'occultation 100 comprend soit l'unité de commande locale 12, soit l'unité de commande centrale 13, soit l'unité de commande locale 12 et l'unité de commande centrale 13.

Des moyens de commande de l'actionneur électromécanique 11, permettant le déplacement de l'écran 2 du dispositif d'occultation 3, comprennent au moins une unité de contrôle 15, en particulier une unité électronique de contrôle.

Cette unité de contrôle 15 appartient au dispositif d'entraînement motorisé 5 et, plus particulièrement, à l'actionneur électromécanique 11. Celle-ci est apte à mettre en fonctionnement un moteur électrique 16 de l'actionneur électromécanique 11 et, en particulier, permettre l'alimentation en énergie électrique du moteur électrique 16.

Ainsi, l'unité de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31, comme illustré à la figure 2.

Avantageusement, l'unité de contrôle 15 comprend, en outre, un premier module de communication 27, comme illustré à la figure 2, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité de contrôle 15 est de type sans fil. En particulier, le premier module de communication 27 est configuré pour recevoir des ordres de commande radioélectriques.

Avantageusement, le premier module de communication 27 peut en complément ou en variante permettre la réception d'ordres de commande transmis par des moyens filaires.

Avantageusement, l'unité de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité de contrôle 15.

Ainsi, le deuxième module de communication 36 de l'unité de commande locale 12 ou de l'unité de commande centrale 13 échange des ordres de commande avec le premier module de communication 27 de l'unité de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant de la fenêtre 40 ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Avantageusement, l'installation d'occultation 100 comprend, en outre, au moins un capteur, non représenté.

Avantageusement, le capteur comprend au moins un deuxième module de communication 36, tel que celui décrit en référence à l'unité de commande locale 12 ou à l'unité de commande centrale 13. En outre, le deuxième module de communication 36 du capteur est configuré pour communiquer, autrement dit communique, avec le premier module de communication 27 de l'unité de contrôle 15.

Avantageusement, le capteur peut être, par exemple, un capteur d'éclairement, un capteur de température, un capteur d'humidité ou un capteur de vent.

Ainsi, le dispositif d'entraînement motorisé 5 peut également être contrôlé automatiquement par la réception d'un ordre de commande correspondant à au moins un signal provenant du capteur.

En complément ou en variante, le dispositif d'entraînement motorisé 5 peut également être contrôlé automatiquement par la réception d'un ordre de commande correspondant à au moins un signal provenant d'une horloge, non représentée, de l'unité de contrôle 15, en particulier du microcontrôleur 31.

En complément ou en variante, le capteur et/ou l'horloge peuvent être intégrés à l'unité de commande locale 12 ou à l'unité de commande centrale 13.

On décrit à présent, plus en détail et en référence aux figures 3 et 4, le dispositif d'entraînement motorisé 5, y compris l'actionneur électromécanique 11, appartenant à l'installation d'occultation 100 et, plus particulièrement, au dispositif d'occultation 3 illustré aux figures 1 et 2.

L'actionneur électromécanique 11 comprend le moteur électrique 16.

Le moteur électrique 16 est représenté par son enveloppe à la figure 3, sans détails sur ses éléments constitutifs internes.

Le moteur électrique 16 est logé, autrement dit est monté, à l'intérieur d'un carter 17, en particulier dans une configuration assemblée de l'actionneur électromécanique 11.

Avantageusement, le moteur électrique 16 comprend un rotor et un stator, non représentés et positionnés de manière coaxiale autour de l'axe de rotation X, qui est également l'axe de rotation du tube d'enroulement 4 en configuration montée du dispositif d'entraînement motorisé 5.

Ici, le moteur électrique 16 est de type à courant continu.

Le moteur électrique 16 comprend, en outre, un collecteur, non représenté, et des balais, non représentés. Lorsque le moteur électrique 16 est commandé en fonctionnement par l'unité de contrôle 15, les balais frottent contre le collecteur, autrement dit, les balais sont configurés pour frotter contre le collecteur.

Avantageusement, le moteur électrique 16, en particulier le rotor, comprend un arbre 53.

Avantageusement, l'actionneur électromécanique 11 comprend, en outre, un réducteur 19.

Le réducteur 19 est accouplé, autrement dit est configuré pour être accouplé, avec le moteur électrique 16, en particulier dans une configuration assemblée de l'actionneur électromécanique 11.

Avantageusement, l'actionneur électromécanique 11 comprend, en outre, un dispositif de transmission de couple 54, comme illustré à la figure 3.

Ici, le dispositif de transmission de couple 54 est constitué d'un organe monobloc, pouvant également être appelé cardan.

Ici, un arbre d'entrée 52 du réducteur 19 est accouplé, autrement dit est configuré pour être accouplé, avec l'arbre 53 du moteur électrique 16 par l'intermédiaire du dispositif de transmission de couple 54, en particulier dans la configuration assemblée de l'actionneur électromécanique 11.

Avantageusement, le réducteur 19 comprend un ou plusieurs étages de réduction, non représentés. L'étage de réduction, l'un des étages de réduction ou chaque étage de réduction peut être de type épicycloïdal.

Le nombre d'étages de réduction du réducteur n'est pas limitatif. Le nombre d'étages de réduction peut être de un, de deux ou supérieur ou égal à trois.

L'actionneur électromécanique 11 comprend, en outre, le carter 17. Le carter 17 est tubulaire.

Avantageusement, le réducteur 19 et le dispositif de transmission de couple 54 sont logés, autrement dit sont montés, à l'intérieur du carter 17, en particulier dans la configuration assemblée de l'actionneur électromécanique 11.

Ici, le carter 17 est creux. Le carter 17 comprend une première extrémité 17a et une deuxième extrémité 17b. La deuxième extrémité 17b est opposée à la première extrémité 17a.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Ici, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, une couronne 30, pouvant également être appelée manchon.

La couronne 30 est disposée, autrement dit est configurée pour être disposée, au voisinage de la première extrémité 17a du carter 17, en particulier dans la configuration assemblée de l'actionneur électromécanique 11.

Avantageusement, le dispositif d'entraînement motorisé 5 et, plus particulièrement, l'actionneur électromécanique 11 comprend, en outre, un câble d'alimentation électrique 18, comme illustré aux figures 2 à 4.

Avantageusement, l'unité de contrôle 15 peut être alimentée en énergie électrique au moyen du câble d'alimentation électrique 18. Le câble d'alimentation électrique 18 est connecté électriquement à au moins une source d'alimentation en énergie électrique, pouvant être, par exemple, un réseau d'alimentation en énergie électrique, notamment dit « PoE » (acronyme du terme anglo-saxon Power over Ethernet), et/ou à une batterie, qui peut être rechargeable, notamment au moyen d'un panneau photovoltaïque et/ou d'un chargeur, non représenté, ou au travers du réseau d'alimentation en énergie électrique.

En variante ou en complément, non représentée, la source d'alimentation en énergie électrique est un réseau d'alimentation en énergie électrique du secteur.

Avantageusement, le dispositif d'occultation 3 et, plus particulièrement, le dispositif d'entraînement motorisé 5 comprend, en outre, un dispositif d'alimentation en énergie électrique 26, visible à la figure 2. Le dispositif d'alimentation en énergie électrique 26 forme, autrement dit est, une source d'alimentation en énergie électrique, pour au moins l'unité de contrôle 15 et le moteur électrique 16. L'actionneur électromécanique 11 est relié électriquement au dispositif d'alimentation en énergie électrique 26.

Le dispositif d'alimentation en énergie électrique 26 est configuré pour alimenter, autrement dit alimente, en énergie électrique l'actionneur électromécanique 11 et, plus particulièrement, l'unité de contrôle 15 et le moteur électrique 16.

Avantageusement, le dispositif d'alimentation en énergie électrique 26 comprend au moins une batterie 24.

Ainsi, le dispositif d'alimentation en énergie électrique 26 permet d'alimenter en énergie électrique l'actionneur électromécanique 11, sans être lui-même relié électriquement à un réseau d'alimentation électrique du secteur.

Avantageusement, le dispositif d'alimentation en énergie électrique 26 comprend, en outre, au moins un panneau photovoltaïque 25.

Dans l'exemple de réalisation illustré à la figure 2, le panneau photovoltaïque 25 est relié électriquement à la batterie 24, par une liaison électrique L24-25.

Avantageusement, l'actionneur électromécanique 11 est relié électriquement au dispositif d'alimentation en énergie électrique 26 et, plus particulièrement, à la batterie 24, en particulier au moyen du câble d'alimentation électrique 18.

La batterie 24 est configurée pour alimenter, autrement dit alimente, en énergie électrique l'actionneur électromécanique 11, en particulier l'unité de contrôle 15 et le moteur électrique 16.

Avantageusement, la batterie 24 est configurée pour être alimentée, autrement dit est alimentée, en énergie électrique par le panneau photovoltaïque 25.

Ainsi, le rechargement de la batterie 24 est mis en œuvre par énergie solaire, au moyen du panneau photovoltaïque 25.

Dans l'exemple de réalisation illustré à la figure 2, la batterie 24 est disposée à l'extérieur du coffre 9.

En variante, non représentée, la batterie 24 peut être disposée au niveau du coffre 9, en particulier à l'intérieur du coffre 9, à l'intérieur du tube d'enroulement 4 tout en étant à l'extérieur du carter 17, ou à l'intérieur du carter 17, en particulier dans la configuration assemblée de l'actionneur électromécanique 11. Dans ce dernier cas, l'actionneur électromécanique 11 comprend la batterie 24.

Ici, l'actionneur électromécanique 11 comprend le câble d'alimentation électrique 18 permettant son alimentation en énergie électrique, notamment l'alimentation électrique de l'unité de contrôle 15 et l'alimentation électrique du moteur électrique 16, en particulier à partir de la batterie 24.

Ici, la batterie 24 est reliée électriquement directement à l'unité de contrôle 15, par le câble d'alimentation électrique 18.

Ainsi, le câble d'alimentation électrique 18 permet une alimentation en énergie électrique de l'actionneur électromécanique 11, en particulier de l'unité de contrôle 15 et du moteur électrique 16, à partir de la ou des source(s) d'alimentation en énergie électrique.

Avantageusement, l'actionneur électromécanique 11 comprend, en outre, un arbre de sortie 20.

L'arbre de sortie 20 est disposé, autrement dit est configuré pour être disposé, au voisinage de la deuxième extrémité 17b du carter 17, en particulier dans la configuration assemblée de l'actionneur électromécanique 11.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 de l'actionneur électromécanique 11 est en saillie par rapport au carter 17 de l'actionneur électromécanique 11, en particulier par rapport à la deuxième extrémité 17b du carter 17.

Avantageusement, l'arbre de sortie 20 de l'actionneur électromécanique 11 est configuré pour entraîner en rotation, autrement dit entraîne en rotation, un élément de liaison, non représenté. Cet élément de liaison est relié au tube d'enroulement 4, en particulier dans la configuration assemblée du dispositif d'occultation 3. L'élément de liaison est, par exemple, réalisé sous la forme d'une roue. Cet élément de liaison est solidaire en rotation, autour de l'axe de rotation X, à la fois de l'arbre de sortie 20 et du tube d'enroulement 4.

Lors de la mise en fonctionnement de l'actionneur électromécanique 11, le moteur électrique 16 et le réducteur 19 entraînent en rotation, autour de l'axe de rotation X, l'arbre de sortie 20 de l'actionneur électromécanique 11. En outre, l'arbre de sortie 20 de l'actionneur électromécanique 11 entraîne en rotation, autour de l'axe de rotation X, le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

L'actionneur électromécanique 11 comprend, en outre, un module de filtrage 22 d'ondes électromagnétiques.

Le module de filtrage 22 traite, autrement dit est configuré pour traiter, filtrer ou atténuer, les ondes électromagnétiques générées par le moteur électrique 16, lorsque ce dernier fonctionne, autrement dit est commandé en fonctionnement par l'unité de contrôle 15, notamment en raison du frottement de ses balais sur son collecteur.

Le module de filtrage 22 est logé, autrement dit est monté, à l'intérieur du carter 17, en particulier dans la configuration assemblée de l'actionneur électromécanique 11.

L'unité de contrôle 15 est reliée électriquement au moteur électrique 16, au moyen d'une liaison électrique L15-16, par l'intermédiaire du module de filtrage 22.

Avantageusement, l'actionneur électromécanique 11 comprend, en outre, un frein 29.

Le frein 29 est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Avantageusement, le frein 29 est logé, autrement dit est monté, à l'intérieur du carter 17 de l'actionneur électromécanique 11, en particulier dans la configuration assemblée de l'actionneur électromécanique 11.

Ici, le frein 29 est un frein magnétique.

En variante, non représentée, le frein 29 est un frein à ressort, un frein à came ou un frein électromagnétique.

Ici et comme visible aux figures 3 et 4, le frein 29 est configuré pour être disposé, autrement dit est disposé, en particulier dans la configuration assemblée de l'actionneur électromécanique 11, entre le moteur électrique 16 et le réducteur 19, c'est-à-dire à la sortie du moteur électrique 16.

En variante, non représentée, le frein 29 est configuré pour être disposé, autrement dit est disposé, en particulier dans la configuration assemblée de l'actionneur électromécanique 11, entre l'unité de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, l'actionneur électromécanique 11 comprend, en outre, un dispositif de détection de fins de course et/ou d'obstacle, lors du déplacement de l'écran 2. Ce dispositif de détection de fins de course et/ou d'obstacle peut être mécanique ou électronique.

Avantageusement, le dispositif de détection de fins de course et/ou d'obstacle est mis en œuvre au moyen du microcontrôleur 31 de l'unité de contrôle 15 et, en particulier, au moyen d'un algorithme mis en œuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30. La couronne 30 permet ainsi de réaliser un palier. La deuxième liaison pivot, non représentée, est réalisée au niveau d'une deuxième extrémité du tube d'enroulement 4, opposée à la première extrémité.

La couronne 30 forme, autrement dit est configurée pour former ou constituer, un palier de guidage en rotation du tube d'enroulement 4, en particulier dans la configuration assemblée du dispositif d'occultation 3.

Avantageusement, l'actionneur électromécanique 11 comprend, en outre, un support de couple 21.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Ainsi, le support de couple 21 permet de fixer l'actionneur électromécanique 11 sur un bâti, en particulier à l'une des joues 9a du coffre 9.

Avantageusement, le support de couple 21 est en saillie au niveau de la première extrémité 17a du carter 17.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut supporter au moins une partie de l'unité de contrôle 15.

Avantageusement, le support de couple 21 est fixé, autrement dit est configuré pour être fixé, au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Avantageusement, le support de couple 21 comprend une première partie 21a, pouvant également être appelée « point fixe », et une deuxième partie 21b, pouvant également être appelée « tête d'actionneur ».

Avantageusement, la première partie 21a du support de couple 21 est assemblée, autrement dit est configurée pour être assemblée, avec le carter 17, en particulier dans la configuration assemblée de l'actionneur électromécanique 11. En outre, la deuxième partie 21b du support de couple 21 est configurée pour être assemblée, autrement dit est assemblée, avec le coffre 9, en particulier dans une configuration assemblée de l'actionneur électromécanique 11 dans le dispositif d'occultation 3.

Dans un exemple de réalisation, la deuxième partie 21b du support de couple 21 est assemblée, autrement dit est configurée pour être assemblée, sur la première partie 21a du support de couple 21, en particulier dans la configuration assemblée de l'actionneur électromécanique 11. Dans ce cas, la deuxième partie 21b du support de couple 21 est assemblée sur la première partie 21a du support de couple 21 au moyen d'éléments d'assemblage.

Ainsi, le support de couple 21 est constitué d'au moins deux pièces distinctes formant chacune respectivement les première et deuxième parties 21a, 21b du support de couple 21.

De cette manière, la deuxième partie 21b du support de couple 21 peut être interchangeable par rapport à la première partie 21a du support de couple 21, notamment en fonction de la forme et du type des éléments de maintien, non représentés, disposés au niveau du coffre 9.

Dans un autre exemple de réalisation, non représenté, le support de couple 21 peut être constitué d'une seule pièce, autrement dit d'une pièce monobloc, formant les première et deuxième parties 21a, 21b du support de couple 21.

Avantageusement, la deuxième partie 21b du support de couple 21 peut présenter différentes formes extérieures, notamment une forme cannelée, dite « en étoile », autrement dit comprenant des reliefs sur son contour, ou une forme ronde, autrement dit dépourvue de reliefs sur son contour, non représentée.

Avantageusement, au moins une portion de la première partie 21a du support de couple 21 est de forme générale cylindrique et est disposée, autrement dit est configurée pour être disposée, à l'intérieur du carter 17, en particulier dans la configuration assemblée de l'actionneur électromécanique 11.

Avantageusement, un diamètre extérieur Ø21 d'au moins une portion de la deuxième partie 21b du support de couple 21 est supérieur à un diamètre extérieur Ø17 du carter 17.

Avantageusement, le support de couple 21 comprend, en outre, une butée 33, comme illustrée à la figure 3. En outre, la butée 33 est en appui, autrement dit est configurée pour être en appui, contre le carter 17, au niveau de la première extrémité 17a du carter 17, en particulier dans la configuration assemblée de l'actionneur électromécanique 11.

Ainsi, la butée 33 du support de couple 21 permet de limiter l'enfoncement de la première partie 21a du support de couple 21 dans le carter 17, suivant la direction de l'axe de rotation X.

De cette manière, la première partie 21a du support de couple 21 est disposée à l'intérieur du carter 17 et la deuxième partie 21b du support de couple 21 est disposée à l'extérieur du carter 17.

Ici, la butée 33 du support de couple 21 comprend un épaulement. Plus particulièrement, elle est réalisée sous la forme d'une collerette, en particulier de forme cylindrique et à génératrice rectiligne.

Dans un exemple de réalisation, non représenté, la couronne 30 est disposée ou insérée, autrement dit est configurée pour être disposée ou insérée, autour du support de couple 21, en particulier de la première partie 21a du support de couple 21, notamment dans la configuration assemblée de l'actionneur électromécanique 11. Dans ce cas, la couronne 30 est montée libre en rotation autour du support de couple 21, en particulier de la première partie 21a du support de couple 21.

En variante, non représentée, la couronne 30 est disposée ou insérée, autrement dit est configurée pour être disposée ou insérée, autour d'une partie du carter 17, en particulier dans la configuration assemblée de l'actionneur électromécanique 11. Dans ce cas, la couronne 30 est montée libre en rotation autour du carter 17.

Dans une autre variante, telle qu'illustrée à la figure 3, la couronne 30 est disposée ou insérée, autrement dit est configurée pour être disposée ou insérée, d'une part, autour du support de couple 21 et, d'autre part, autour d'une partie du carter 17 de l'actionneur électromécanique 11, en particulier de la première extrémité 17a du carter 17, notamment dans la configuration assemblée de l'actionneur électromécanique 11. Dans un tel cas, la couronne 30 est montée libre en rotation, d'une part, autour du support de couple 21 et, d'autre part, autour du carter 17 de l'actionneur électromécanique 11.

Avantageusement, le support de couple 21 comprend, en outre, un couvercle, non représenté.

Le couvercle est monté, autrement dit est configuré pour être monté, sur le support de couple 21, notamment sur la deuxième partie 21b du support de couple 21, en particulier dans la configuration assemblée de l'actionneur électromécanique 11.

L'unité de contrôle 15 est logée, autrement dit est montée, au moins en partie à l'intérieur du carter 17, en particulier dans la configuration assemblée de l'actionneur électromécanique 11.

Ici et comme illustré à la figure 3, l'unité de contrôle 15 est disposée, autrement dit est intégrée, à l'intérieur du carter 17 de l'actionneur électromécanique 11.

En complément ou en variante, non représentée, l'unité de contrôle 15 est montée en partie à l'extérieur du carter 17 de l'actionneur électromécanique 11 et, en particulier, dans le support de couple 21 ou dans le coffre 9.

Avantageusement, l'unité de contrôle 15 comprend au moins une carte électronique 15a. La ou chaque carte électronique 15a est alimentée en énergie électrique au moyen du câble d'alimentation électrique 18.

Ici, l'unité de contrôle 15 comprend une seule carte électronique 15a.

Avantageusement, le support de couple 21 comprend, autrement dit intègre, au moins un dispositif de sélection, non représenté, en particulier un bouton, pouvant être, par exemple, de type poussoir ou magnétique. En outre, le ou chaque dispositif de sélection est configuré, notamment, pour réaliser un réglage de l'actionneur électromécanique 11 au travers d'un ou plusieurs modes de configuration, pour appairer avec l'actionneur électromécanique 11 une ou plusieurs unités de commande 12, 13, pour réinitialiser un ou plusieurs paramètres, pouvant être, par exemple, une position de fin de course, pour réinitialiser la ou les unités de commande 12, 13 appairées ou encore pour commander le déplacement de l'écran 2.

Avantageusement, le support de couple 21 comprend, autrement dit intègre, au moins un dispositif d'affichage, non représenté. En outre, le ou chaque dispositif d'affichage est configuré, notamment, pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5.

Avantageusement, lorsque le support de couple 21 comprend un dispositif d'affichage, le paramètre de fonctionnement que ce dispositif d'affichage permet de visualiser est un état de charge de la batterie 24.

En variante, non représentée, l'unité de contrôle 15 comprend une première carte électronique 15a et une deuxième carte électronique. La première carte électronique 15a est disposée à l'intérieur du carter 17 de l'actionneur électromécanique 11, en particulier dans la configuration assemblée de l'actionneur électromécanique 11. En outre, la deuxième carte électronique est disposée à l'intérieur du support de couple 21 de l'actionneur électromécanique 11, en particulier dans la configuration assemblée de l'actionneur électromécanique 11. Avantageusement, la première carte électronique 15a est configurée pour contrôler le moteur électrique 16. En outre, la deuxième carte électronique est configurée pour, notamment, accéder aux fonctions de paramétrage et/ou de configuration de l'actionneur électromécanique 11, au moyen du ou des dispositifs de sélection et, éventuellement, du ou des dispositifs d'affichage.

Avantageusement, l'actionneur électromécanique 11 comprend, en outre, un dispositif de comptage 59.

Le dispositif de comptage 59 est configuré pour coopérer, autrement dit coopère, avec l'unité de contrôle 15. En outre, le dispositif de comptage 59 et l'unité de contrôle 15 sont configurés pour déterminer une position, pouvant être appelée « courante », de l'écran 2.

Avantageusement, l'unité de contrôle 15 est configurée pour surveiller au moins un signal provenant du dispositif de comptage 59 à une fréquence prédéterminée, notamment en fonction de la position de l'écran 2.

Ici, le dispositif de comptage 59 est de type magnétique.

Dans un tel cas, le dispositif de comptage 59 peut comprendre une roue codeuse 60 et un ou plusieurs capteurs, non représentés, en particulier à effet Hall.

Ici, le dispositif de comptage 59 comprend deux capteurs.

Le nombre de capteurs n'est pas limitatif et peut être différent. Il peut être, par exemple, égal à un ou à trois.

Ici, la couronne 30 comprend, sur sa face intérieure, une denture, non représentée, configurée pour coopérer, autrement dit coopérant, avec un pignon, non représenté, installé à l'intérieur du support de couple 21 ou, alternativement, à l'intérieur du carter 17 de l'actionneur électromécanique 11. Dans ce cas, la roue codeuse 60 est reliée au pignon, en particulier au moyen d'un arbre, non représenté. Ainsi, la denture de la couronne 30 est configurée pour entraîner en rotation, autrement dit entraîne en rotation, le pignon, de sorte à compter le nombre de tours du tube d'enroulement 4. Dans ce cas, la denture de la couronne 30 et le pignon font partie du dispositif de comptage 59.

En variante, non représentée, la roue codeuse 60 est reliée à l'arbre 53 du moteur électrique 16. En outre, le ou chaque capteur est assemblé sur une carte électronique de l'unité de contrôle 15, en particulier sur une troisième carte électronique ou sur la première carte électronique 15a.

Ainsi, le dispositif de comptage 59 permet de déterminer le nombre de tours réalisés par l'arbre 53 du moteur électrique 16.

En variante, non représentée, le dispositif de comptage 59 peut être dépourvu de capteurs. Dans ce cas, le dispositif de comptage 59 est configuré pour, en coopération avec l'unité de contrôle 15, analyser les signaux de commande d'alimentation en énergie électrique du moteur électrique 16 et déterminer une position, pouvant être appelée « courante », du rotor du moteur électrique 16 et, par conséquent, de l'arbre de sortie 20 de l'actionneur électromécanique 11 et du tube d'enroulement 4.

En variante, non représentée, le dispositif de comptage 59 permet de déterminer le nombre de tours réalisés par l'arbre de sortie 20 de l'actionneur électromécanique 11.

Le dispositif de comptage 59 permet également de déterminer le sens de rotation du tube d'enroulement 4 et/ou de gérer les positions de fin de course de l'écran 2.

Le type du dispositif de comptage n'est pas limitatif et peut être différent, en particulier optique, par exemple un encodeur équipé d'un ou plusieurs capteurs optiques, ou temporel.

Dans l'exemple de réalisation illustré aux figures 3 et 4, le câble d'alimentation électrique 18 comprend un premier connecteur électrique 56 et un deuxième connecteur électrique 57. Le câble d'alimentation électrique 18 comprend, en outre, des premiers conducteurs électriques 58 et des deuxièmes conducteurs électriques 61. Les premiers conducteurs électriques 58 sont reliés électriquement au premier connecteur électrique 56. Les deuxièmes conducteurs électriques 61 sont reliés électriquement au deuxième connecteur électrique 57. En outre, le premier connecteur électrique 56 est configuré pour être relié, autrement dit est relié électriquement, à la batterie 24 et le deuxième connecteur électrique 57 est configuré pour être relié, autrement dit est relié électriquement, au panneau photovoltaïque 25, en particulier dans la configuration assemblée du dispositif d'entraînement motorisé 5 et, par conséquent, du dispositif d'occultation 3.

Par ailleurs, l'actionneur électromécanique 11 comprend, en outre, une antenne radioélectrique 80. En outre, l'antenne radioélectrique 80 est reliée électriquement, autrement est configurée pour être reliée électriquement, à l'unité de contrôle 15 et, par conséquent, au premier module de communication 27, en particulier dans la configuration assemblée de l'actionneur électromécanique 11.

Ici, l'antenne radioélectrique 80 est réalisée sous la forme d'un fil, en particulier métallique, pouvant être, par exemple, en cuivre ou en aluminium. En outre, ce fil est recouvert d'une gaine d'isolation électrique, autrement dit est logé dans une gaine d'isolation électrique, pouvant être, par exemple, en matière plastique.

Ici, l'antenne radioélectrique 80 fait partie intégrante du câble d'alimentation électrique 18. Autrement dit, le câble d'alimentation électrique 18 comprend l'antenne radioélectrique 80.

En variante, non représentée, l'antenne radioélectrique 80 est distincte du câble d'alimentation électrique 18.

Dans une autre variante, non représentée, l'antenne radioélectrique 80 est réalisée au moyen d'un câble coaxial.

Dans une autre variante, non représentée, l'antenne radioélectrique 80 est réalisée au moyen d'un circuit imprimé, pouvant être, par exemple, être intégré à l'une des cartes électroniques 15a ou équivalente de l'unité de contrôle 15.

Avantageusement, la batterie 24 est de type rechargeable.

Avantageusement, la batterie 24 comprend une pluralité d'éléments de stockage d'énergie 32, en particulier reliés électriquement en série. Les éléments de stockage d'énergie 32 de la batterie 24 peuvent être, notamment, des accumulateurs rechargeables.

Avantageusement, le panneau photovoltaïque 25 comprend une pluralité de cellules photovoltaïques 43. Dans ce cas, la batterie 24 est alimentée en énergie électrique au moyen des cellules photovoltaïques 43 du panneau photovoltaïque 25.

Le dispositif d'entraînement motorisé 5, en particulier le panneau photovoltaïque 25 et/ou l'unité de contrôle 15, comprend des éléments de chargement configurés pour charger la batterie 24, à partir de l'énergie solaire récupérée par le panneau photovoltaïque 25. Dans ce cas, le courant circule entre les composants 25, 24 et 15 à travers une liaison filaire, pouvant être distincte du câble d'alimentation en énergie électrique 18.

Ainsi, les éléments de chargement configurés pour charger la batterie 24, à partir de l'énergie solaire, permettent de convertir l'énergie solaire récupérée par le panneau photovoltaïque 25 en énergie électrique.

En variante ou en complément, le dispositif d'entraînement motorisé 5, en particulier l'actionneur électromécanique 11, est alimenté en énergie électrique à partir de la batterie 24, à partir d'une batterie auxiliaire, non représentée, ou à partir d'un réseau d'alimentation électrique du secteur, en particulier par le réseau alternatif commercial, notamment en fonction d'un état de charge de la batterie 24.

Ici, la carte électronique 15a est configurée pour contrôler le moteur électrique 16, pour permettre la recharge de la batterie 24 et, éventuellement, accéder à des fonctions de paramétrage et/ou de configuration de l'actionneur électromécanique 11, au moyen de dispositifs de sélection et, éventuellement, d'affichage, non représentés. Comme mentionné ci-dessus, les éléments de chargement de la batterie 24 peuvent être disposés au niveau de la carte électronique 15a.

En variante, la première carte électronique 15a est configurée pour contrôler, autrement dit contrôle, le moteur électrique 16. En outre, une deuxième carte électronique, non représentée, est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique.

Avantageusement, le panneau photovoltaïque 25 peut être fixé sur le coffre 9, sur un mur du bâtiment, sur l'une des coulisses latérales 6, sur une vitre de la fenêtre 40 ou sur un cadre dormant de la fenêtre 40.

On décrit à présent, plus en détail et en référence aux figures 3 à 8, l'assemblage du module de filtrage 22 appartenant à l'actionneur électromécanique 11 illustré à la figure 3, ainsi que la liaison électrique L15-16 entre l'unité de contrôle 15 et le moteur électrique 16, par l'intermédiaire du module de filtrage 22.

L'unité de contrôle 15, le module de filtrage 22 et le moteur électrique 16 sont logés, autrement dit sont montés, à l'intérieur du carter 17, en particulier dans la configuration assemblée de l'actionneur électromécanique 11.

L'unité de contrôle 15, le module de filtrage 22 et le moteur électrique 16 sont disposés selon une direction définie par l'axe de rotation X et, plus particulièrement, se succèdent selon cette direction.

Ici, le premier module de communication 27 de l'unité de contrôle 15 est logé, autrement dit est monté, à l'intérieur du carter 17, en particulier dans la configuration assemblée de l'actionneur électromagnétique 11.

La liaison électrique L15-16 entre l'unité de contrôle 15 et le moteur électrique 16, par l'intermédiaire du module de filtrage 22, est mise en œuvre au moyen de plusieurs conducteurs électriques 44, 45, 46, 47.

Le module de filtrage 22 comprend au moins une première inductance 41, une deuxième inductance 42 et un support 48.

Les première et deuxième inductances 41, 42 peuvent également être appelées des bobines d'antiparasitage.

La première inductance 41 s'étend suivant une direction définie par un premier axe longitudinal L1. La deuxième inductance 42 s'étend suivant une direction définie par un deuxième axe longitudinal L2. En outre, les première et deuxième inductances 41, 42 sont montées, autrement dit sont configurées pour être montées, sur le support 48, en particulier dans une configuration assemblée du module de filtrage 22.

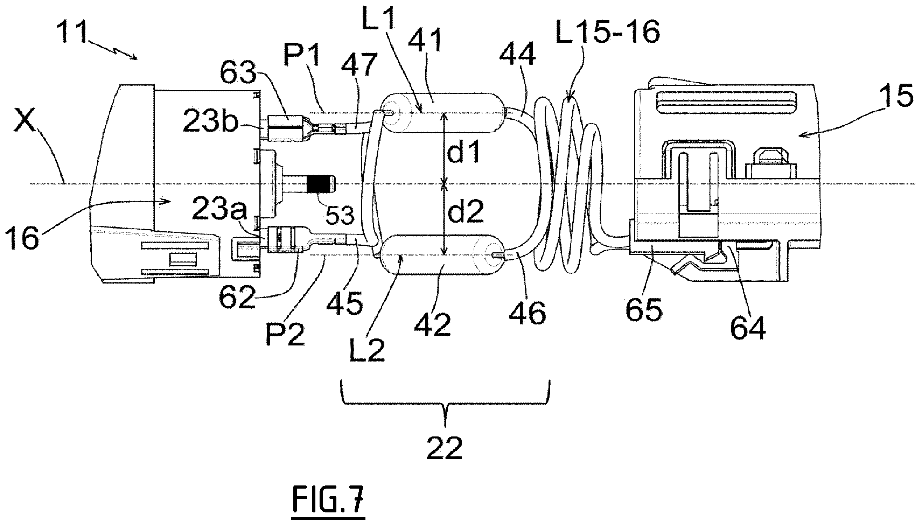

Les premier et deuxième axes longitudinaux L1, L2 des première et deuxième inductances 41, 42 s'étendent respectivement dans un premier plan P1 et dans un deuxième plan P2. Les premier et deuxième plans P1, P2 sont parallèles à l'axe de rotation X et, en l'occurrence, perpendiculaires à un plan défini par la figure 7.

Ainsi, les premier et deuxième plans P1, P2 sont parallèles l'un par rapport à l'autre, ainsi qu'à l'axe de rotation X.

Dans le premier plan P1, le premier axe longitudinal L1 de la première inductance 41 est incliné par rapport à l'axe de rotation X d'une première valeur d'inclinaison α1 non-nulle. En outre, dans le deuxième plan P2, le deuxième axe longitudinal L2 de la deuxième inductance 42 est incliné par rapport à l'axe de rotation X d'une deuxième valeur d'inclinaison α2 non-nulle.

Ainsi, le support 48 permet de maîtriser un positionnement dans l'espace, en particulier un emplacement et une orientation, des première et deuxième inductances 41, 42 à l'intérieur du carter 17 entre l'unité de contrôle 15 et le moteur électrique 16, de sorte à améliorer une performance de traitement, autrement dit de filtrage ou d'atténuation, des ondes électromagnétiques par le module de filtrage 22.

En outre, le support 48 permet de guider les conducteurs électriques 44, 45, 46, 47 reliant les première et deuxième inductances 41, 42 à l'unité de contrôle 15 et au moteur électrique 16 à l'intérieur du carter 17, aussi bien lors d'une opération d'assemblage de l'actionneur électromécanique 11, que dans une configuration assemblée de l'actionneur électromécanique 11.

De cette manière, le guidage des conducteurs électriques 44, 45, 46, 47, ainsi que le positionnement des première et deuxième inductances 41, 42, en particulier leur emplacement et leur orientation, au moyen du support 48 à l'intérieur du carter 17 entre l'unité de contrôle 15 et le moteur électrique 16 permettent d'éviter une rupture des conducteurs électriques 44, 45, 46, 47, en particulier au niveau d'une jonction électrique entre l'un des conducteurs électriques 44, 45, 46, 47 et l'une des première et deuxième inductances 41, 42.

Par ailleurs, le filtrage des ondes électromagnétiques est mis en œuvre de manière simple en reliant électriquement en série les première et deuxième inductances 41, 42 du module de filtrage 22 entre l'unité de contrôle 15 et le moteur électrique 16 par les conducteurs électriques 44, 45, 46, 47.

De cette manière, une mise à la masse entre le module de filtrage 22 et le carter 17 n'est pas nécessaire pour évacuer les perturbations électromagnétiques.

Par conséquent, le coût d'obtention de l'actionneur électromécanique 11 est moins élevé.

Ce module de filtrage 22 permet également de limiter, voire d'éviter, des perturbations de fonctionnement d'autres organes de l'actionneur électromécanique 11, en particulier de celui du premier module de communication 27 de l'unité de contrôle 15, qui sont provoquées par les ondes électromagnétiques générées lors de l'activation électrique du moteur électrique 16.

De cette manière, une portée de réception de signaux, en particulier radioélectriques, par le premier module de communication 27 de l'unité de contrôle 15, qui ont été émis à partir de l'une des unités de commande 12, 13, n'est pas ou est peu réduite, autrement dit n'est pas ou est peu dégradée. En complément ou en variante, une portée d'émission de signaux, en particulier radioélectriques, par le premier module de communication 27 de l'unité de contrôle 15 vers l'une des unités de commande 12, 13 n'est pas ou est peu réduite, autrement dit n'est pas ou est peu dégradée.

En outre, le premier axe longitudinal L1 de la première inductance 41 est incliné par rapport au deuxième axe longitudinal L2 de la deuxième inductance 42 d'une valeur correspondant à la somme de la première valeur d'inclinaison α1 et de la deuxième valeur d'inclinaison α2.

L'inclinaison des première et deuxième inductances 41, 42 par rapport à l'axe de rotation X, respectivement de la première valeur d'inclinaison α1 et de la deuxième valeur d'inclinaison α2, permet de minimiser l'encombrement du module de filtrage 22 à l'intérieur du carter 17, notamment parallèlement à l'axe de rotation X.

De cette manière, le carter 17 présente une longueur L17 qui est minimisée.

Les première et deuxième valeurs d'inclinaison α1, α2 présentent la même valeur absolue. La première valeur d'inclinaison α1 est de signe positif. En outre, la deuxième valeur d'inclinaison α2 est de signe négatif.

Ainsi, le premier axe longitudinal L1 de la première inductance 41 est incliné par rapport au deuxième axe longitudinal L2 de la deuxième inductance 42 d'une valeur correspondant au double de la valeur absolue de chacune des première et deuxième valeurs d'inclinaison α1, α2.

De cette manière, l'inclinaison en sens opposé des première et deuxième inductances 41, 42, respectivement de la première valeur d'inclinaison α1 et de la deuxième valeur d'inclinaison α2, par rapport à l'axe de rotation X permet, d'une part, de limiter les contraintes sur les conducteurs électriques 44, 45, 46, 47 et, d'autre part, de garantir le positionnement des conducteurs électriques 44, 45, 46, 47 à l'intérieur du carter 17, aussi bien lors d'une opération d'assemblage de l'actionneur électromécanique 11, que dans une configuration assemblée de l'actionneur électromécanique 11.

La valeur absolue des première et deuxième valeurs d'inclinaison α1, α2 est comprise dans une plage s'étendant entre 30° et 60°.

Avantageusement, la valeur absolue des première et deuxième valeurs d'inclinaison α1, α2 est de 45°.

Ainsi, l'encombrement du module de filtrage 22 à l'intérieur du carter 17 est minimisé de manière optimale.

De cette manière, la longueur L17 du carter 17 est minimisée de manière optimale.

En outre, la fabrication du support 48 est simplifiée en utilisant un outil de fabrication facile à industrialiser.

Avantageusement, les premier et deuxième plans P1, P2 dans lesquels s'étendent les premier et deuxième axes longitudinaux L1, L2 des première et deuxième inductances 41, 42 sont disposés de part et d'autre de l'axe de rotation X.

Ainsi, la performance de traitement, autrement dit de filtrage ou d'atténuation, des ondes électromagnétiques par le module de filtrage 22 est optimisée grâce à un éloignement entre les première et deuxième inductances 41, 42 qui est maximisé par rapport à un espace disponible à l'intérieur du carter 17.

Avantageusement, le premier plan P1 est distant de l'axe de rotation X d'une première valeur d'écartement d1 non-nulle. Le deuxième plan P2 est distant de l'axe de rotation X d'une deuxième valeur d'écartement d2 non-nulle. En outre, les première et deuxième valeurs d'écartement d1, d2 sont égales.

Ainsi, le support 48 permet de maîtriser un écartement entre les première et deuxième inductances 41, 42, de sorte à améliorer une performance de traitement, autrement dit de filtrage ou d'atténuation, des ondes électromagnétiques par le module de filtrage 22.

Avantageusement, le support 48 comprend des éléments de fixation par encliquetage élastique 49. En outre, chacune des première et deuxième inductances 41, 42 est montée, autrement dit est configurée pour être montée, sur le support 48 au moyen des éléments de fixation par encliquetage élastique 49, en particulier dans la configuration assemblée du module de filtrage 22.

Avantageusement, le support 48 est formé par une pièce monobloc.

Avantageusement, le support 48 comprend un corps 48a.

Avantageusement, le corps 48a du support 48 comprend au moins une première paroi 67 et une deuxième paroi 68. En outre, les première et deuxième parois 67, 68 s'étendent parallèlement à l'axe de rotation X.

Avantageusement, le corps 48a du support 48 comprend, en outre, au moins une troisième paroi 69 et une quatrième paroi 70. En outre, chacune des troisième et quatrième parois 69, 70 est reliée aux première et deuxième parois 67, 68.

Avantageusement, chacune des troisième et quatrième parois 69, 70 présente une section en forme d'arc de cercle, selon un plan de coupe orthogonal à l'axe de rotation X.

Avantageusement, le corps 48a du support 48 comprend, en outre, au moins une paroi de rigidification 71. En outre, la ou chaque paroi de rigidification 71 est reliée, d'une part, à la première paroi 67 et, d'autre part, à la deuxième paroi 68.

Ici, le corps 48a du support 48 comprend deux parois de rigidification 71.

Le nombre de parois de rigidification du corps du support n'est pas limitatif et peut être différent. Il peut être, par exemple, égal à un ou supérieur ou égal à trois.

Avantageusement, les éléments de fixation par encliquetage élastique 49 de la première inductance 41 sont reliées à la deuxième paroi 68. En outre, les éléments de fixation par encliquetage élastique 49 de la deuxième inductance 42 sont reliées à la première paroi 67.

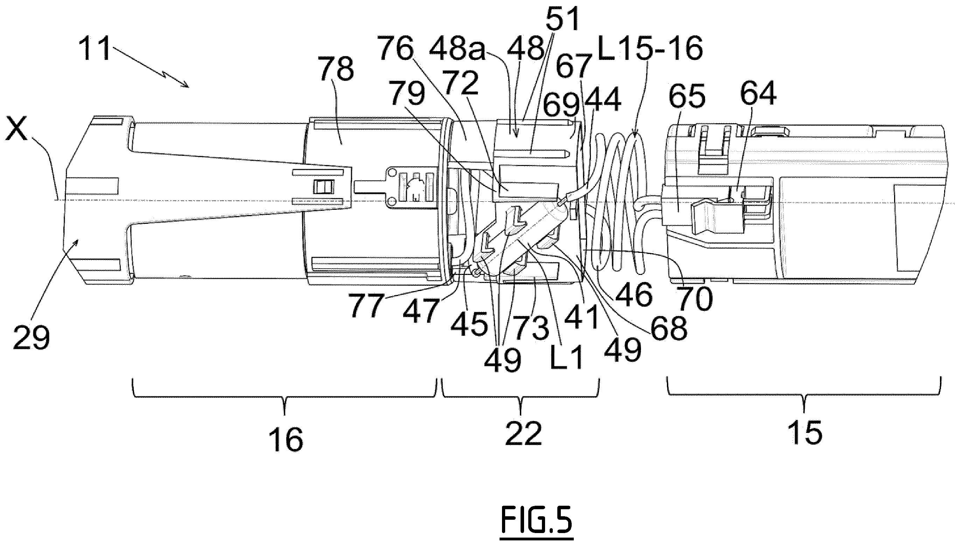

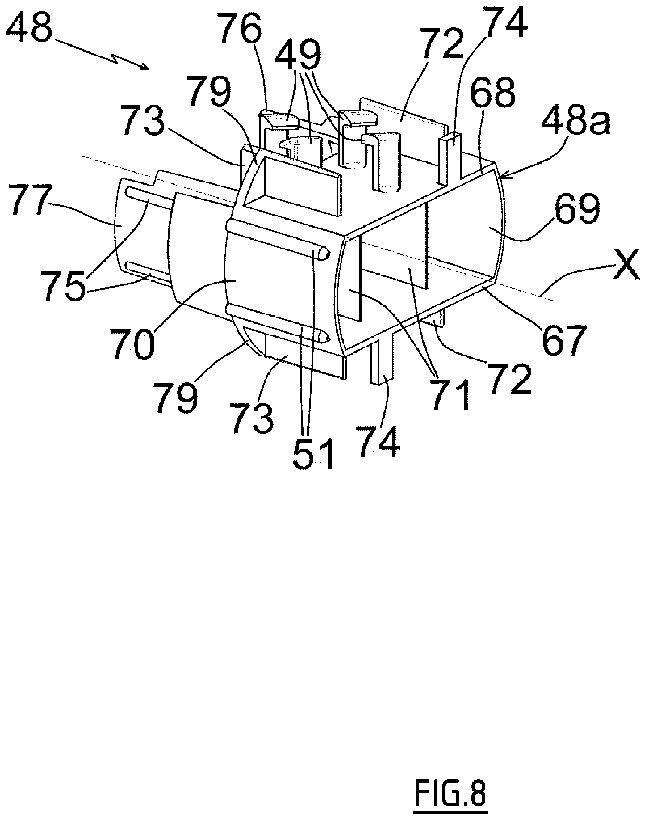

Aux figures 5 et 8, seuls les éléments de fixation par encliquetage élastique 49 reliés à la deuxième paroi 68 sont visibles. Les éléments de fixation par encliquetage élastique 49, qui sont reliés à la première paroi 67, sont masqués par le corps 48a du support 48.

Avantageusement, une partie des éléments de fixation par encliquetage élastique 49 est disposée, autrement dit est configurée pour être disposée, entre la première paroi 67 du corps 48a du support 48 et le carter 17 et une autre partie des éléments de fixation par encliquetage élastique 49 est disposée, autrement dit est configurée pour être disposée, entre la deuxième paroi 68 du corps 48a du support 48 et le carter 17, en particulier dans la configuration assemblée de l'actionneur électromécanique 11.

Avantageusement, la liaison électrique L15-16 entre l'unité de contrôle 15 et le moteur électrique 16 comprend un premier, un deuxième, un troisième et un quatrième conducteurs électriques 44, 45, 46, 47. La première inductance 41 est reliée électriquement, d'une part, à l'unité de contrôle 15 par le premier conducteur électrique 44 et, d'autre part, au moteur électrique 16 par le deuxième conducteur électrique 45. En outre, la deuxième inductance 42 est reliée électriquement, d'une part, à l'unité de contrôle 15 par le troisième conducteur électrique 46 et, d'autre part, au moteur électrique 16 par le quatrième conducteur électrique 47.

Ainsi, les premier et troisième conducteurs électriques 44, 46 sont disposés respectivement en amont des première et deuxième inductances 41, 42, selon un sens de circulation d'un courant électrique à partir de l'unité de contrôle 15 vers le moteur électrique 16. En outre, les deuxième et quatrième conducteurs électriques 45, 47 sont disposés respectivement en aval des première et deuxième inductances 41, 42, selon le sens de circulation du courant électrique à partir de l'unité de contrôle 15 vers le moteur électrique 16.

Les premier et troisième conducteurs électriques 44, 46 peuvent être appelés des conducteurs électriques « pollués », en l'occurrence par les ondes électromagnétiques générées par l'activation électrique du moteur électrique 16, et les deuxième et quatrième conducteurs électriques 45, 47 peuvent être appelés des conducteurs électriques « propres », en l'occurrence traités, autrement dit filtrés par le module de filtrage 22.

L'inclinaison des première et deuxième inductances 41, 42 par rapport à l'axe de rotation X, respectivement de la première valeur d'inclinaison α1 et de la deuxième valeur d'inclinaison α2, permet, en outre, de garantir la séparation des premier et troisième conducteurs électriques 44, 46, dits conducteurs électriques « pollués », par rapport aux deuxième et quatrième conducteurs électriques 45, 47, dits conducteurs électriques « propres ».

Avantageusement, les conducteurs électriques 44, 45, 46, 47, notamment les premier et troisième conducteurs électriques 44, 46 disposés entre l'unité de contrôle 15 et le module de filtrage 22, sont torsadés, autrement dit sont configurés pour être torsadés, autour de l'axe de rotation X, en particulier dans la configuration assemblée de l'actionneur électromécanique 11.

Ainsi, l'insertion de l'unité de contrôle 15 à l'intérieur du carter 17 est facilitée lors de l'assemblage de l'actionneur électromécanique 11, en particulier dans le cas où le moteur électrique 16 et, éventuellement, le réducteur 19 et le frein 29 sont insérés auparavant à l'intérieur du carter 17.

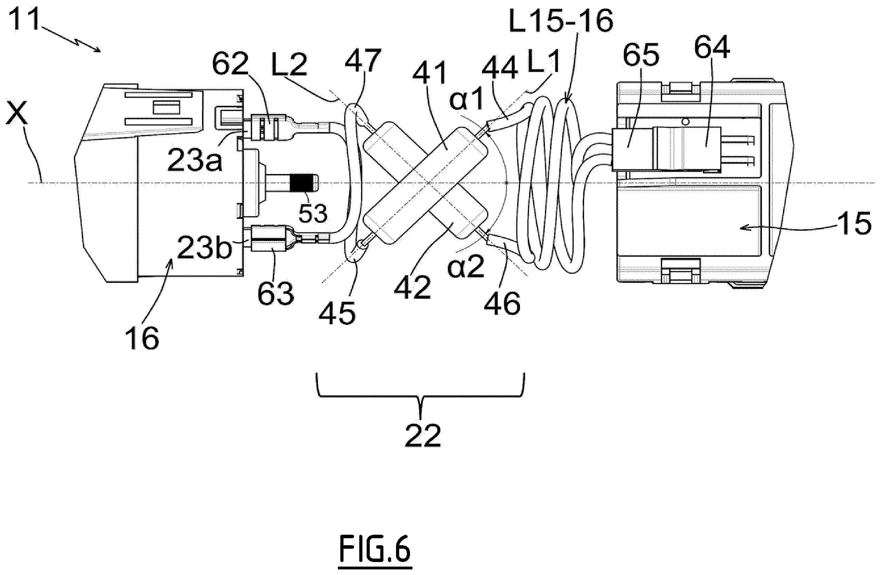

Avantageusement, le moteur électrique 16 comprend, en outre, une première borne électrique 23a et une deuxième borne électrique 23b, comme illustré aux figures 6 et 7, ces figures 6 et 7 étant représentées selon deux angles de vue décalés angulairement autour de l'axe de rotation X.

Avantageusement, la première borne électrique 23a est une borne d'alimentation électrique positive et la deuxième borne électrique 23b est une borne d'alimentation électrique négative, ou inversement.

Avantageusement, le deuxième conducteur électrique 45 comprend un premier connecteur électrique 62. Le premier connecteur électrique 62 est connecté électriquement à, autrement dit est enfiché sur, la première borne électrique 23a du moteur électrique 16. Le quatrième conducteur électrique 47 comprend un deuxième connecteur électrique 63. En outre, le deuxième connecteur électrique 63 est connecté électriquement à, autrement dit est enfiché sur, la deuxième borne électrique 23b du moteur électrique 16.

Avantageusement, la première inductance 41 comprend un premier point de connexion électrique 41a et un deuxième point de connexion électrique 41b. En outre, la deuxième inductance 42 comprend un troisième point de connexion électrique 42a et un quatrième point de connexion électrique 42b. Les premier et deuxième points de connexion électrique 41a, 41b de la première inductance 41 et les premier et deuxième points de connexion électrique 42a, 42b de la deuxième inductance 42 sont représentés à la figure 4.

Avantageusement, le premier conducteur électrique 44 est relié électriquement au premier point de connexion électrique 41a de la première inductance 41. Le deuxième conducteur électrique 45 est relié électriquement au deuxième point de connexion électrique 41b de la première inductance 41. Le troisième conducteur électrique 46 est relié électriquement au troisième point de connexion électrique 42a de la deuxième inductance 42. En outre, le quatrième conducteur électrique 47 est relié électriquement au quatrième point de connexion électrique 42b de la deuxième inductance 42.

Ici, la liaison électrique entre respectivement les premier, deuxième, troisième et quatrième points de connexion électrique 41a, 41b, 42a, 42b et les premier, deuxième, troisième et quatrième conducteurs électriques 44, 45, 46, 47 est mise en œuvre par soudage.

En variante, non représentée, la liaison électrique entre respectivement les premier, deuxième, troisième et quatrième points de connexion électrique 41a, 41b, 42a, 42b et les premier, deuxième, troisième et quatrième conducteurs électriques 44, 45, 46, 47 est mise en œuvre au moyen de connecteurs électriques.

Avantageusement, l'unité de contrôle 15 comprend, en outre, un premier connecteur électrique 64. Le premier conducteur électrique 44 et le troisième conducteur électrique 46 sont reliés électriquement à un deuxième connecteur électrique 65. En outre, le deuxième connecteur électrique 65 des premier et troisième conducteurs électriques 44, 46 est connecté électriquement sur le premier connecteur électrique 64 de l'unité de contrôle 15, en particulier dans la configuration assemblée de l'actionneur électromécanique 11. Autrement dit, le deuxième connecteur électrique 65 est configuré pour être connecté électriquement sur le premier connecteur électrique 64.

Avantageusement, le support 48 comprend, en outre, au moins deux premières ailettes 72 et au moins deux deuxièmes ailettes 73. L'une des premières ailettes 72 et l'une des deuxièmes ailettes 73 coopèrent respectivement avec la première inductance 41, en particulier dans la configuration assemblée du module de filtrage 22, de sorte à maintenir en position la première inductance 41 par rapport au support 48. Autrement dit, l'une des premières ailettes 72 et l'une des deuxièmes ailettes 73 sont configurées pour coopérer respectivement avec la première inductance 41. En outre, l'autre des premières ailettes 72 et l'autre des deuxièmes ailettes 73 coopèrent respectivement avec la deuxième inductance 42, en particulier dans la configuration assemblée du module de filtrage 22, de sorte à maintenir en position la deuxième inductance 42 par rapport au support 48. Autrement dit, l'autre des premières ailettes 72 et l'autre des deuxièmes ailettes 73 sont configurées pour coopérer respectivement avec la deuxième inductance 42.

Ainsi, les premières ailettes 72 et les deuxièmes ailettes 73 du support 48 sont des butées de positionnement des première et deuxième inductances 41, 42.

De cette manière, la première inductance 41 est en appui, autrement dit est configurée pour être en appui, contre l'une des premières ailettes 72 et l'une des deuxièmes ailettes 73, en particulier dans la configuration assemblée du module de filtrage 22. En outre, la deuxième inductance 42 est en appui, autrement dit est configurée pour être en appui, contre l'autre des premières ailettes 72 et l'autre des deuxièmes ailettes 73, en particulier dans la configuration assemblée du module de filtrage 22.

En outre, les premières et deuxièmes ailettes 72, 73 permettent d'éviter que les conducteurs électriques 44, 45, 46, 47 se positionnement respectivement entre le carter 17 et la première paroi 67 du corps 48a du support 48 ou entre le carter 17 et la deuxième paroi 68 du corps 48a du support 48, mis à part la partie de liaison électrique nécessaire pour raccorder électriquement les première et deuxième inductances 41, 42 à l'unité de contrôle 15 et au moteur électrique 16.

Avantageusement, les premières ailettes 72 et les deuxièmes ailettes 73 sont, autrement dit sont configurées pour être, parallèles à l'axe de rotation X, en particulier dans la configuration assemblée de l'actionneur électromécanique 11.

Avantageusement, l'une des premières ailettes 72 et l'autre des premières ailettes 72 sont disposées respectivement, autrement dit sont configurées pour être disposées respectivement, de part et d'autre de l'axe de rotation X, en particulier dans la configuration assemblée de l'actionneur électromécanique 11. En outre, l'une des deuxièmes ailettes 73 et l'autre des deuxièmes ailettes 73 sont disposées respectivement, autrement dit sont configurées pour être disposées respectivement, de part et d'autre de l'axe de rotation X, en particulier dans la configuration assemblée de l'actionneur électromécanique 11.

Avantageusement, l'une des premières ailettes 72 et l'une des deuxièmes ailettes 73 sont reliées à la première paroi 67 du corps 48a du support 48. En outre, l'autre des premières ailettes 72 et l'autre des deuxièmes ailettes 73 sont reliées à la deuxième paroi 68 du corps 48a du support 48.

Avantageusement, l'une des premières ailettes 72 et l'une des deuxièmes ailettes 73 sont disposées, autrement dit sont configurées pour être disposées, entre la première paroi 67 du corps 48a du support 48 et le carter 17, en particulier dans la configuration assemblée de l'actionneur électromécanique 11. En outre, l'autre des premières ailettes 72 et l'autre des deuxièmes ailettes 73 sont disposées, autrement dit sont configurées pour être disposées, entre la deuxième paroi 68 du corps 48a du support 48 et le carter 17, en particulier dans la configuration assemblée de l'actionneur électromécanique 11.

Avantageusement, une partie des éléments de fixation par encliquetage élastique 49 est disposée, sur la première paroi 67, entre l'une des premières ailettes 72 et l'une des deuxièmes ailettes 73 et une autre partie des éléments de fixation par encliquetage élastique 49 est disposée, sur la deuxième paroi 68, entre l'autre des premières ailettes 72 et l'autre des deuxièmes ailettes 73.

Avantageusement, le corps 48a du support 48 comprend, en outre, des éléments de rigidification 79. En outre, chacun des éléments de rigidification 79 relie respectivement soit l'une des première ailettes 72 à la première paroi 67 ou à la deuxième paroi 68 du corps 48a du support 48 soit l'une des deuxièmes ailettes 73 à la première paroi 67 ou à la deuxième paroi 68 du corps 48a du support 48.

Ici et de manière nullement limitative, chaque élément de rigidification 79 est en forme de quart de disque.

Avantageusement, le support 48 comprend, en outre, au moins deux troisièmes ailettes 74, comme illustré à la figure 8. L'une des troisièmes ailettes 74 coopère, autrement dit est configurée pour coopérer, avec la première inductance 41, en particulier dans la configuration assemblée du module de filtrage 22, de sorte à maintenir en position la première inductance 41 par rapport au support 48. En outre, l'autre des troisièmes ailettes 74 coopère, autrement dit est configurée pour coopérer, avec la deuxième inductance 42, en particulier dans la configuration assemblée du module de filtrage 22, de sorte à maintenir en position la deuxième inductance 42 par rapport au support 48.

Ainsi, les troisièmes ailettes 74 du support 48 sont des butées de positionnement des première et deuxième inductances 41, 42.

De cette manière, la première inductance 41 est également en appui, autrement dit est configurée pour être également en appui, contre l'une des troisièmes ailettes 74, en particulier dans la configuration assemblée du module de filtrage 22. En outre, la deuxième inductance 42 est également en appui, autrement dit est configurée pour être également en appui, contre l'autre des troisièmes ailettes 74, en particulier dans la configuration assemblée du module de filtrage 22.

Avantageusement, les troisièmes ailettes 74 sont, autrement dit sont configurées pour être, orthogonales à l'axe de rotation X, en particulier dans la configuration assemblée de l'actionneur électromécanique 11.

Avantageusement, l'une des troisièmes ailettes 74 et l'autre des troisièmes ailettes 74 sont disposées respectivement, autrement dit sont configurées pour être disposées respectivement, de part et d'autre de l'axe de rotation X, en particulier dans la configuration assemblée de l'actionneur électromécanique 11.

Avantageusement, l'une des troisièmes ailettes 74 est disposée, autrement dit est configurée pour être disposée, entre la première paroi 67 du corps 48a du support 48 et le carter 17, en particulier dans la configuration assemblée de l'actionneur électromécanique 11. En outre, l'autre des troisièmes ailettes 74 est disposée, autrement dit est configurée pour être disposée, entre la deuxième paroi 68 du corps 48a du support 48 et le carter 17, en particulier dans la configuration assemblée de l'actionneur électromécanique 11.

Avantageusement, les troisièmes ailettes 74 sont disposées, autrement dit sont configurées pour être disposées, en vis-à-vis de l'unité de contrôle 15, en particulier dans la configuration assemblée de l'actionneur électromécanique 11.

Avantageusement, le carter 17 comprend une surface interne 17c et une surface externe 17d. La surface externe 17d est opposée à la surface interne 17c.

Avantageusement, le support 48 comprend des premières surépaisseurs 51, autrement dit des premiers godrons. Une première partie des premières surépaisseurs 51, en particulier deux des premières surépaisseurs 51, est ménagée sur la troisième paroi 69 du corps 48a du support 48, comme illustré à la figure 5, et une deuxième partie des premières surépaisseurs 51, en particulier deux des premières surépaisseurs 51, est ménagée sur la quatrième paroi 70 du corps 48a du support 48, comme illustré à la figure 8. En outre, chaque première surépaisseur 51 est en appui, autrement dit est configurée pour être en appui, contre la surface interne 17c du carter 17, en particulier dans la configuration assemblée de l'actionneur électromécanique 11.

Ainsi, le module de filtrage 22 est centré à l'intérieur du carter 17 au moyen des premières surépaisseurs 51 du support 48, selon une direction radiale à l'axe de rotation X.

Le nombre de premières surépaisseurs ménagées respectivement sur les troisième et quatrième parois du corps du support n'est pas limitatif et peut être différent. Il peut être, exemple, égal à un ou supérieur ou égal à trois.

Avantageusement, le support 48 comprend, en outre, au moins une première patte 76 et une deuxième patte 77. En outre, la première patte 76 est ménagée dans le prolongement de la troisième paroi 69 du corps 48a du support 48 et la deuxième patte 77 est ménagée dans le prolongement de la quatrième paroi 70 du corps 48a du support 48.

Avantageusement, le moteur électrique 16 comprend, en outre, un bol 78, comme illustré aux figures 3 à 5.

Avantageusement, le support 48 comprend des deuxièmes surépaisseurs 75, autrement dit des deuxièmes godrons. Une première partie des deuxièmes surépaisseurs 75, en particulier deux des deuxièmes surépaisseurs 75, est ménagée sur la première patte 76 du support 48 et une deuxième partie des deuxièmes surépaisseurs 75, en particulier deux des deuxièmes surépaisseurs 75, est ménagée sur la deuxième patte 77 du support 48. En outre, chaque deuxième surépaisseur 75 est en appui, autrement dit est configurée pour être en appui, contre une surface interne, non représentée, du bol 78, en particulier dans la configuration assemblée de l'actionneur électromécanique 11. Seule la deuxième partie des deuxièmes surépaisseurs 75 ménagée sur la deuxième patte 77 du support 48 est illustrée à la figure 8.

Ainsi, le module de filtrage 22 est centré par rapport au moteur électrique 16 au moyen des deuxièmes surépaisseurs 75 du support 48 et du bol 78, selon une direction radiale à l'axe de rotation X.

Le nombre de deuxièmes surépaisseurs ménagées respectivement sur les première et deuxième pattes du support n'est pas limitatif et peut être différent. Il peut être, exemple, égal à un ou supérieur ou égal à trois.

Le type d'éléments de fixation du support sur le bol ne sont pas limitatifs et peuvent être différents. Le type des éléments de fixation peut être, par exemple, par encliquetage élastique.

Avantageusement, la fixation du support 48 sur le bol 78 est mise en œuvre par emmanchement en force.

De cette manière, le support 48 est fixé, autrement dit est configuré pour être fixé, sur le bol 78, en particulier dans la configuration assemblée de l'actionneur électromécanique 11.

En variante, non représentée, le support 48 est fixé, autrement dit est configuré pour être fixé, sur le moteur électrique 16 ou sur l'unité de contrôle 15, en particulier dans la configuration assemblée de l'actionneur électromécanique 11.

Grâce à la présente invention, le support permet de maîtriser un positionnement dans l'espace, en particulier un emplacement et une orientation, des première et deuxième inductances à l'intérieur du carter entre l'unité de contrôle et le moteur électrique, de sorte à améliorer une performance de traitement, autrement dit de filtrage ou d'atténuation, des ondes électromagnétiques par le module de filtrage.

De nombreuses modifications peuvent être apportées aux exemples de réalisation décrits précédemment, sans sortir du cadre de l'invention défini par les revendications.

En variante, non représentée, le dispositif d'alimentation en énergie électrique 26 comprend, en outre, un chargeur. Le chargeur est configuré pour être relié électriquement, autrement dit est relié électriquement, à la batterie 24, soit directement à celle-ci, soit au travers de l'actionneur électromécanique 11 et/ou de l'unité de contrôle 15. Le chargeur est configuré pour être branché, autrement dit est branché, sur une prise électrique murale, de sorte à recharger la batterie 24 à partir d'un réseau d'alimentation électrique du secteur. Ce chargeur forme une source d'alimentation en énergie électrique externe.

En variante, non représentée, le dispositif d'alimentation en énergie électrique 26 comprend, en outre, une batterie auxiliaire, la batterie auxiliaire étant configurée pour recharger la batterie 24. La batterie auxiliaire est configurée pour être reliée électriquement, autrement dit est reliée électriquement, à la batterie 24, soit directement à celle-ci, soit au travers de l'actionneur électromécanique 11 et/ou de l'unité de contrôle 15. Ainsi, la batterie 24 peut être rechargée au moyen de la batterie auxiliaire formant une source d'alimentation en énergie électrique externe, en particulier dans le cas où le dispositif d'occultation 3 est éloigné d'une prise électrique murale. En outre, la batterie auxiliaire peut permettre de recharger une batterie d'autres équipements électriques, notamment nomades, tels que, par exemple, un téléphone portable ou un ordinateur portable.

En variante, non représentée, l'actionneur électromécanique 11 est inséré dans un rail, en particulier de section carrée ou rectangulaire, pouvant être ouvert à l'une ou à ses deux extrémités, en particulier dans la configuration assemblée du dispositif d'occultation 3. Par ailleurs, l'actionneur électromécanique 11 peut être configuré pour entraîner un arbre d'entraînement sur lequel s'enroule des cordons de déplacement et/ou d'orientation de l'écran 2, qui peut, avantageusement, être un store à lames dans ce cas.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (11) pour un dispositif d'occultation (3), l'actionneur électromécanique (11) comprenant au moins :
- un carter (17),
- un moteur électrique (16), le moteur électrique (16) étant de type à courant continu,
- une unité de contrôle (15), l'unité de contrôle (15) commandant le moteur électrique (16), et
- un module de filtrage (22) d'ondes électromagnétiques, l'unité de contrôle (15) étant reliée électriquement au moteur électrique (16), au moyen d'une liaison électrique (L15-16), par l'intermédiaire du module de filtrage (22),
la liaison électrique (L15-16) entre l'unité de contrôle (15) et le moteur électrique (16), par l'intermédiaire du module de filtrage (22), étant mise en œuvre au moyen de plusieurs conducteurs électriques (44, 45, 46, 47),
le module de filtrage (22) comprenant au moins :
- une première inductance (41), la première inductance (41) s'étendant suivant une direction définie par un premier axe longitudinal (L1),
- une deuxième inductance (42), la deuxième inductance (42) s'étendant suivant une direction définie par un deuxième axe longitudinal (L2), et
- un support (48), les première et deuxième inductances (41, 42) étant montées sur le support (48),
les premier et deuxième axes longitudinaux (L1, L2) des première et deuxième inductances (41, 42) s'étendant respectivement dans un premier plan (P1) et dans un deuxième plan (P2), les premier et deuxième plans (P1, P2) étant parallèles à un axe de rotation (X) de l'actionneur électromécanique (11),
dans le premier plan (P1), le premier axe longitudinal (L1) de la première inductance (41) étant incliné par rapport à l'axe de rotation (X) d'une première valeur d'inclinaison (α1) non-nulle,
dans le deuxième plan (P2), le deuxième axe longitudinal (L2) de la deuxième inductance (42) étant incliné par rapport à l'axe de rotation (X) d'une deuxième valeur d'inclinaison (α2) non-nulle, et
les première et deuxième valeurs d'inclinaison (α1, α2) présentant la même valeur absolue,
**caractérisé**
**en ce que** l'unité de contrôle (15), le module de filtrage (22) et le moteur électrique (16) sont logés à l'intérieur du carter (17) et disposés selon une direction définie par l'axe de rotation (X),
**en ce que** le carter (17) est tubulaire,
**en ce que** la première valeur d'inclinaison (α1) est de signe positif,
**en ce que** la deuxième valeur d'inclinaison (α2) est de signe négatif,
et **en ce que** la valeur absolue des première et deuxième valeurs d'inclinaison (α1, α2) est comprise dans une plage s'étendant entre 30° et 60°.

2. Actionneur électromécanique (11) pour un dispositif d'occultation (3) selon la revendication 1, **caractérisé en ce que** la valeur absolue des première et deuxième valeurs d'inclinaison (α1, α2) est de 45°.

3. Actionneur électromécanique (11) pour un dispositif d'occultation (3) selon la revendication 1 ou selon la revendication 2, **caractérisé en ce que** les premier et deuxième plans (P1, P2) dans lesquels s'étendent les premier et deuxième axes longitudinaux (L1, L2) des première et deuxième inductances (41, 42) sont disposés de part et d'autre de l'axe de rotation (X).

4. Actionneur électromécanique (11) pour un dispositif d'occultation (3) selon la revendication 3, **caractérisé**
**en ce que** le premier plan (P1) est distant de l'axe de rotation (X) d'une première valeur d'écartement (d1) non-nulle,
**en ce que** le deuxième plan (P2) est distant de l'axe de rotation (X) d'une deuxième valeur d'écartement (d2) non-nulle,
et **en ce que** les première et deuxième valeurs d'écartement (d1, d2) sont égales.

5. Actionneur électromécanique (11) pour un dispositif d'occultation (3) selon l'une quelconque des revendications 1 à 4, **caractérisé**
**en ce que** le support (48) comprend des éléments de fixation par encliquetage élastique (49),
et **en ce que** chacune des première et deuxième inductances (41, 42) est montée sur le support (48) au moyen des éléments de fixation par encliquetage élastique (49).

6. Actionneur électromécanique (11) pour un dispositif d'occultation (3) selon l'une quelconque des revendications 1 à 5, **caractérisé**
**en ce que** la liaison électrique (L15-16) entre l'unité de contrôle (15) et le moteur électrique (16) comprend un premier, un deuxième, un troisième et un quatrième conducteurs électriques (44, 45, 46, 47),
**en ce que** la première inductance (41) est reliée électriquement, d'une part, à l'unité de contrôle (15) par le premier conducteur électrique (44) et, d'autre part, au moteur électrique (16) par le deuxième conducteur électrique (45),
et **en ce que** la deuxième inductance (42) est reliée électriquement, d'une part, à l'unité de contrôle (15) par le troisième conducteur électrique (46) et, d'autre part, au moteur électrique (16) par le quatrième conducteur électrique (47).

7. Actionneur électromécanique (11) pour un dispositif d'occultation (3) selon l'une quelconque des revendications 1 à 6, **caractérisé**
**en ce que** l'unité de contrôle (15) comprend un premier module de communication (27),
et **en ce que** le premier module de communication (27) de l'unité de contrôle (15) est logé à l'intérieur du carter (17).

8. Dispositif d'occultation (3),
le dispositif d'occultation (3) comprenant au moins :
- un écran (2), et
- un actionneur électromécanique (11), l'écran (2) étant entraîné en déplacement par l'actionneur électromécanique (11),
**caractérisé en ce que** l'actionneur électromécanique (11) est conforme à l'une quelconque des revendications 1 à 7.

9. Dispositif d'occultation (3) selon la revendication 8, **caractérisé**
**en ce que** le dispositif d'occultation (3) comprend, en outre, un tube d'enroulement (4),
**en ce que** l'écran (2) est enroulable sur le tube d'enroulement (4),
et **en ce que** le tube d'enroulement (4) est agencé de sorte à être entraîné en rotation par l'actionneur électromécanique (11).
